# FASCICULE DE BREVET EUROPEEN

(11) **EP 1 059 481 B1**
(45) Date de publication et mention de la délivrance du brevet: **22.09.2004**
(21) Numéro de dépôt: 00401618.4
(22) Date de dépôt: 08.06.2000
(51) Int. Cl.: F16L 55/128, F16L 55/132, E21B 33/127

(54) **Dispositif de sécurité universel et procédé de protection d'une canalisation**
Universelle Sicherheitsvorrichtung und Verfahren zum Schützen einer Rohrleitung
Universal safety device and method for protecting a pipeline

(30) Priorité: 10.06.1999 FR 9907346; 26.01.2000 FR 0000998
(43) Date de publication de la demande: 13.12.2000
(73) Titulaire: GAZ DE FRANCE (SERVICE NATIONAL), F-75017 Paris (FR)
(72) Inventeur: Mahe, Jean-Luc, 94370 Sucy-en-Brie (FR); Giraud, Daniel, 78260 Acheres (FR); Leme, David, 94140 Alfortville (FR); Drouvin, Robert, 37210 Vernou/Brenne (FR)
(74) Mandataire: Bentz, Jean-Paul

(56) Documents cités:
- DE-A- 3 339 572
- GB-A- 2 155 080
- US-A- 2 856 002

## Description

La présente invention concerne, de façon générale, les dispositifs du type représenté par les vannes de sécurité à déclenchement automatique utilisées dans les réseaux de distribution de gaz, ainsi qu'un procédé de protection de tels réseaux.

Plus précisément, l'invention concerne, selon un premier de ses aspects, un dispositif de sécurité sélectivement introduit dans une canalisation de fluide pour la protéger contre un débit excessif du fluide qui y circule, ce dispositif comprenant : une chambre présentant une extrémité amont et une extrémité aval; des moyens d'admission contrôlée, sensibles à une perte de charge dans la canalisation entre les extrémités amont et aval de la chambre, pour autoriser ou interdire sélectivement l'établissement d'un débit de fluide à travers l'extrémité amont de la chambre; et des moyens de retenue pour maintenir la chambre en place dans la canalisation.

De nombreux dispositifs de ce type sont connus dans l'art antérieur, comme le montre par exemple la vanne décrite dans le brevet US - 5 551 476.

Certains réseaux de distribution de fluides justifient des mesures de sécurité particulières, imposées par la nature du fluide transporté et par d'éventuels risques d'endommagement des conduites dont ces réseaux sont constitués.

Par exemple, les réseaux de distribution de gaz en zone urbaine s'étendent généralement sous les chaussées et les trottoirs, c'est-à-dire sous des ouvrages du domaine public susceptibles de faire l'objet d'interventions diverses, et notamment d'opérations de terrassement.

Or, si une conduite de gaz se trouve accidentellement arrachée ou sectionnée à l'occasion d'une telle opération, la fuite de gaz qui en résulte immédiatement fait apparaître un risque élevé d'incendie ou d'explosion.

Dans ce contexte, des vannes de sécurité ont été mises au point pour obturer les conduites de gaz dès qu'un débit de gaz anormalement élevé y est détecté.

A ce jour, les vannes de sécurité ne peuvent cependant être montées que sur des réseaux neufs en cours de construction, ou éventuellement sur des réseaux existants, mais à l'occasion seulement de leur rénovation.

En effet, dans la mesure où les conduites des réseaux existants peuvent avoir été construites à des époques différentes et suivant des normes différentes, où elles n'ont pas nécessairement des diamètres définis avec une très grande précision, où elles présentent sur leur longueur des obstacles, bavures, écrasements ou restrictions variés, et où la mise en place d'une vanne de sécurité exige un ajustement parfait du corps de vanne à la conduite, l'insertion de vannes de sécurité dans les réseaux existants impose une intervention à l'endroit même de l'insertion, c'est-à-dire une excavation donnant accès au point choisi du réseau, une coupure du réseau, et une adaptation locale du réseau à la vanne, au point d'insertion lui-même.

Ainsi, bien qu'il soit connu d'introduire dans un réseau en charge, notamment à des fins de détection, des dispositifs de taille limitée à travers un point d'accès extérieur au branchement sans avoir à intervenir de façon très lourde sur le réseau, cette technique, analogue au cathétérisme pour l'exploration médicale, est à ce jour inexploitable pour la pose de vannes de sécurité.

L'invention, qui se situe dans ce contexte, a précisément pour but de proposer un dispositif de sécurité susceptible d'être mis en place, sans excavation, dans un réseau par introduction dans une prise de branchement de ce réseau.

A cette fin, le dispositif de l'invention, par ailleurs conforme à la définition générique qu'en donne le préambule ci-dessus, est essentiellement caractérisé en ce qu'il comprend une âme rigide reliée aux moyens de retenue, et une enveloppe gonflable supportée par l'âme rigide, cette enveloppe présentant une paroi latérale qui délimite en partie au moins la chambre, et qui fait face à une paroi de la canalisation, en ce que les moyens d'admission contrôlée sont calibrés pour autoriser sélectivement l'établissement du débit de fluide à travers l'extrémité amont de la chambre au moins jusqu'à permettre un gonflement de l'enveloppe, lorsque la perte de charge est supérieure à un premier seuil déterminé, et en ce que l'enveloppe gonflable obture la canalisation, de façon sélective et au moins partielle, par déplacement radial de sa paroi latérale vers la paroi de la canalisation.

Grâce à ces caractéristiques, le dispositif de sécurité de l'invention, une fois mise en place dans une canalisation, assure donc de façon tout à fait autonome une surveillance du débit du fluide qui y circule, et utilise l'énergie même de ce fluide pour protéger la canalisation contre tout éventuel débit excessif.

Or, même si plusieurs documents antérieurs décrivent déjà des dispositifs comprenant un corps, un clapet, et une enveloppe tubulaire gonflable pour obsturer un passage, aucun de ces dispositifs n'est conçu pour résoudre le problème de l'invention.

Ainsi par exemple, bien que les brevets US 2 856 002, DE 3 339 572, et GB 2 155 080 divulguent des dispositifs d'obturation comprenant une enveloppe gonflable, tous ces dispositifs sont conçus pour être exclusivement commandés par un fluide injecté, de manière volontaire et sélective, à une pression spécifiquement contrôlée pour les actionner, aucun de ces dispositifs n'étant équipé d'un clapet qui serait soumis à une perte de charge à laquelle il serait sensible.

De préférence, l'âme s'étend suivant un axe longitudinal et les moyens de retenue comprennent une pluralité de griffes, chaque griffe présentant une extrémité liée solidaire de l'âme rigide et une extrémité libre, et adoptant sélectivement une position repliée pour laquelle son extrémité libre est relativement proche de l'axe longitudinal, et une position déployée, pour laquelle son extrémité libre est relativement éloignée de l'axe longitudinal, chaque griffe pouvant en outre être élastiquement sollicitée vers sa position déployée.

Dans la mesure où la longueur des griffes doit être adaptée au diamètre de la canalisation et où l'âme du dispositif doit avoir, par rapport au diamètre de la canalisation, un diamètre transversal permettant son introduction aisée dans la canalisation, il peut par exemple être judicieux de prévoir qu'une des griffes ou plusieurs aient une longueur supérieure à la moitié du diamètre de l'âme.

Dans un premier mode de réalisation possible, l'âme rigide comprend par exemple un corps délimité par une paroi tubulaire et présentant une extrémité amont et une extrémité aval, les moyens d'admission contrôlée comprennent un clapet sensible à la perte de charge, supporté par le corps et disposé entre les extrémités amont et aval du corps, et l'enveloppe gonflable est externe au corps et gaine, de façon étanche, une section de longueur utile de la paroi tubulaire dans laquelle est pratiqué au moins un premier perçage, prenant par exemple la forme d'une fente longitudinale.

Ce dispositif de sécurité peut alors comprendre, à l'une au moins des extrémités amont et aval du corps, un embout amont ou aval correspondant, portant des moyens de retenue amont ou aval correspondants, et présentant au moins un premier ergot d'assemblage élastiquement inséré dans le premier perçage.

De préférence, ce dispositif comprend, aux extrémités amont et aval du corps, des embouts amont et aval respectifs, présentant des cheminées amont et aval respectives insérées dans le corps.

Dans un mode de réalisation simple et efficace de l'invention, le clapet comprend un ressort hélicoïdal enfilé sur la cheminée aval, un siège de clapet amont formé par une extrémité interne de la cheminée amont, et une bille élastiquement sollicitée contre le siège de clapet amont par le ressort hélicoïdal.

Le clapet comprend alors, par exemple, un siège de clapet aval formé par une extrémité interne de la cheminée aval, et coopérant avec la bille.

L'une au moins des cheminées amont et aval peut par ailleurs être bordée, hors du corps, par une collerette annulaire correspondante, en périphérie de laquelle se rattachent, par leur extrémité liée, des griffes amont ou aval correspondantes.

Dans le cas avantageux où le dispositif comprend à la fois des griffes amont et des griffes aval, ces dernières se déploient de préférence en parapluie suivant des mouvements respectifs de directions antagonistes.

De même, dans le cas avantageux où le dispositif de l'invention comprend à la fois une cheminée amont et une cheminée aval, l'enveloppe présente de préférence des bourrelets amont et aval débordant respectivement les extrémités amont et aval du corps et enserrant respectivement, de façon étanche, les cheminées amont et aval.

Selon un second mode de réalisation de l'invention, l'âme rigide comprend par exemple essentiellement un fût, tandis qu'une extrémité aval de l'enveloppe gonflable, délimitant l'extrémité aval de la chambre, enserre fixement et de façon étanche une extrémité aval du fût, et qu'une extrémité amont de l'enveloppe gonflable, délimitant l'extrémité amont de la chambre, est fixée sur un manchon monté coulissant sur le fût, les moyens d'admission contrôlée comprenant alors au moins un interstice défini entre le manchon et le fût.

Ces moyens d'admission contrôlée peuvent néanmoins aussi comprendre un ressort de tension, de préférence précontraint, écartant l'une de l'autre les extrémités amont et aval de l'enveloppe.

Selon une autre variante, cumulable avec l'utilisation d'un ressort de tension, les moyens d'admission contrôlée peuvent encore comprendre une variation de section non monotone de l'enveloppe.

Pour assurer un ancrage optimal du dispositif, les griffes sont avantageusement fixées à une extrémité amont du fût et la chambre peut être introduite dans une canalisation de diamètre maximal déterminé, alors que les extrémités libres d'au moins deux griffes prennent appui sur un conduit de raccordement à la canalisation de manière à être, en position déployée, séparées l'une de l'autre par un espace supérieur au diamètre maximal déterminé.

Par ailleurs, le dispositif de sécurité peut avantageusement être conformé de manière à pouvoir, en position repliée des griffes, être inséré dans une douille de mise en place terminée par un ou plusieurs doigts d'appui, cette douille étant sélectivement introduite dans la canalisation au moyen d'un jonc flexible terminé par un poussoir mobile dans la douille et propre à expulser le dispositif hors de la douille.

Des pattes de centrage, s'épanouissant radialement autour du fût, peuvent en outre être fixées de façon souple ou flexible à l'extrémité aval du fût.

Le dispositif de sécurité de l'invention s'applique de façon privilégiée au cas où le fluide est gazeux, et développe tous ses avantages lorsqu'en outre l'enveloppe est élastique et par exemple constituée d'un élastomère.

L'invention concerne également un procédé pour protéger, contre un débit excessif, une canalisation de section transversale déterminée dans laquelle circule, dans un sens d'écoulement déterminé, un fluide susceptible d'exercer entre des zones amont et aval de la canalisation une pression différentielle variable, ce procédé utilisant une variation de la pression différentielle, lorsqu'elle est supérieure à un premier seuil déterminé, pour obturer une veine d'écoulement définie dans la canalisation, et étant essentiellement caractérisé en ce qu'il comprend les modalités et opérations consistant à : partager, au moyen d'une membrane radialement déformable, le fluide circulant sélectivement dans la canalisation en une veine interne à la membrane et une veine externe à la membrane, les veines interne et externe ayant des sections transversales respectives sélectivement variables et complémentaires l'une de l'autre par rapport à la section transversale de la canalisation; empêcher le fluide non présent dans la veine interne d'y pénétrer suivant le sens d'écoulement aussi longtemps que la pression différentielle exercée par le fluide est au plus égale à un premier seuil; admettre dans la veine interne le fluide circulant dans le sens d'écoulement lorsque la pression différentielle exercée par le fluide dépasse le premier seuil; et interdire au fluide de sortir de la veine interne en suivant le sens d'écoulement au moins lorsque la pression différentielle exercée par le fluide dépasse un second seuil.

D'autres caractéristiques et avantages de l'invention ressortiront clairement de la description qui en est faite ci-après, à titre indicatif et nullement limitatif, en référence aux dessins annexés, dans lesquels :

La figure 1 est une vue en coupe longitudinale d'un dispositif conforme au premier mode de réalisation de l'invention, représenté dans la canalisation qu'il obture en cas de débit excessif.

La figure 2 est une vue en coupe transversale du corps d'un dispositif conforme au premier mode de réalisation de l'invention, observé suivant l'incidence indiquée par les flèches II-II de la figure 3.

La figure 3 est une vue en coupe longitudinale du corps d'un dispositif conforme au premier mode de réalisation de l'invention, observé suivant l'incidence indiquée par les flèches III-III de la figure 2.

La figure 4 est une vue en coupe transversale de l'enveloppe d'un dispositif conforme au premier mode de réalisation de l'invention, observé suivant l'incidence indiquée par les flèches IV-IV de la figure 5.

La figure 5 est une vue en coupe longitudinale de l'enveloppe d'un dispositif conforme au premier mode de réalisation de l'invention, observée suivant l'incidence indiquée par les flèches V-V de la figure 4.

La figure 6 est une vue de face de l'embout aval d'un dispositif conforme au premier mode de réalisation de l'invention, observé depuis l'intérieur du corps 2.

La figure 7 est une vue en coupe longitudinale de l'embout aval d'un dispositif conforme au premier mode de réalisation de l'invention, observé suivant l'incidence indiquée par les flèches VII-VII de la figure 6.

La figure 8 est une vue en coupe longitudinale d'un dispositif conforme au second mode de réalisation de l'invention, représenté au repos et illustrant une première variante des moyens de retenue et une première variante des moyens d'admission contrôlée.

La figure 9 est une vue latérale du fût du dispositif de la figure 8.

La figure 10 est une vue en bout du fût illustré à la figure 9, observé suivant l'incidence indiquée par les flèches X-X de la figure 9.

La figure 11 est une vue en coupe longitudinale du manchon du dispositif de la figure 8.

La figure 12 est une vue en bout du manchon illustré à la figure 11, observé suivant l'incidence indiquée par les flèches XII-XII de la figure 11.

La figure 13 est une vue en coupe longitudinale d'une enveloppe, observée au repos et utilisée dans le second mode de réalisation de l'invention en tant que seconde variante des moyens d'admission contrôlée.

La figure 14 est une vue en bout de l'enveloppe illustrée à la figure 13, observée suivant l'incidence indiquée par les flèches XIV-XIV de la figure 13.

La figure 15 est une vue en bout de l'enveloppe illustrée à la figure 13, observée suivant l'incidence indiquée par les flèches XV-XV de la figure 13.

La figure 16A est une vue en coupe d'une canalisation dans laquelle un dispositif conforme au second mode de réalisation de l'invention est retenu prisonnier par des moyens de retenue, seuls représentés et conformes à une seconde variante de réalisation de ces moyens de retenue.

La figure 16B est une vue semblable à la figure 16A, illustrant une troisième variante des moyens de retenue.

La figure 16C est une vue semblable à la figure 16A, illustrant une quatrième variante des moyens de retenue.

La figure 17 est une vue en coupe longitudinale d'un dispositif conforme au second mode de réalisation de l'invention, illustré pendant la phase de sa mise en place dans la canalisation.

La figure 18 est une vue en coupe longitudinale d'un dispositif conforme au second mode de réalisation de l'invention, utilisant des moyens d'admission contrôlée conformes à une troisième variante de réalisation de ces moyens, et illustré dans sa configuration déclenchée.

L'invention concerne un dispositif de sécurité inséré dans une canalisation 1 de fluide, et plus spécifiquement dans une canalisation de gaz dans l'application privilégiée de l'invention, pour protéger cette canalisation contre un débit excessif du gaz qui y circule.

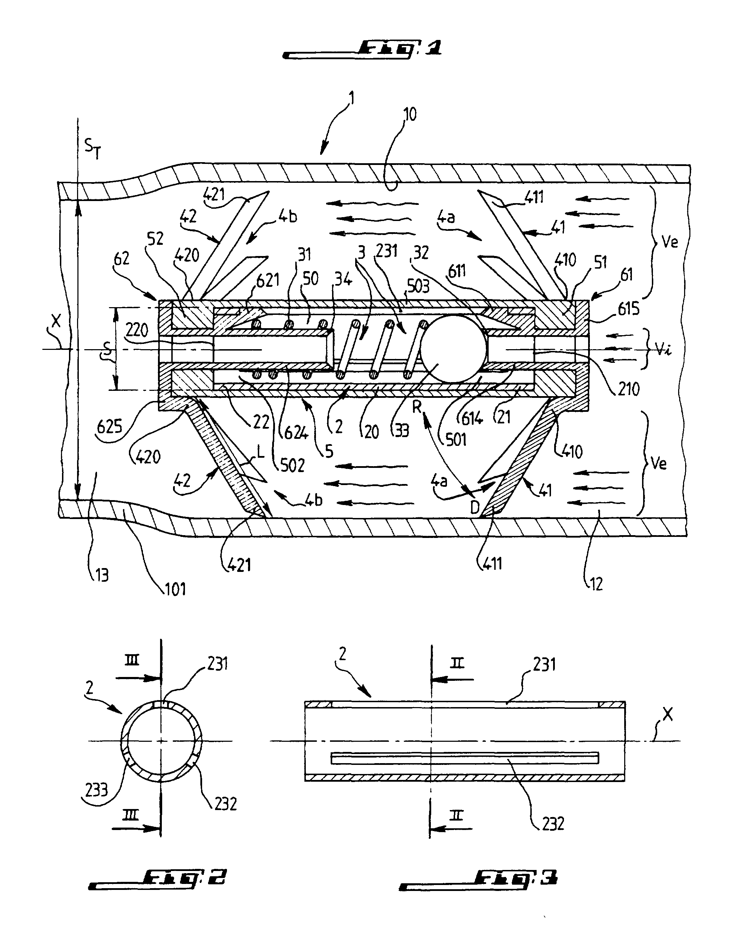

De façon connue en soi, ce dispositif comprend essentiellement une chambre 50, des moyens d'admission contrôlée tels que 3 (figure 1) et 3bis (figures 8, 12, 17, 18), et des organes de retenue 4a, 4b destinés à maintenir la chambre 50 en place dans la canalisation 1, de préférence au centre de cette canalisation suivant une direction radiale.

La chambre 50 présente une extrémité amont 501 et une extrémité aval 502, et les moyens d'admission contrôlée 3 et 3bis sont sensibles à une perte de charge dans la canalisation 1, entre les extrémités amont et aval de la chambre, pour autoriser ou interdire sélectivement l'établissement d'un débit de fluide à travers l'extrémité amont de la chambre.

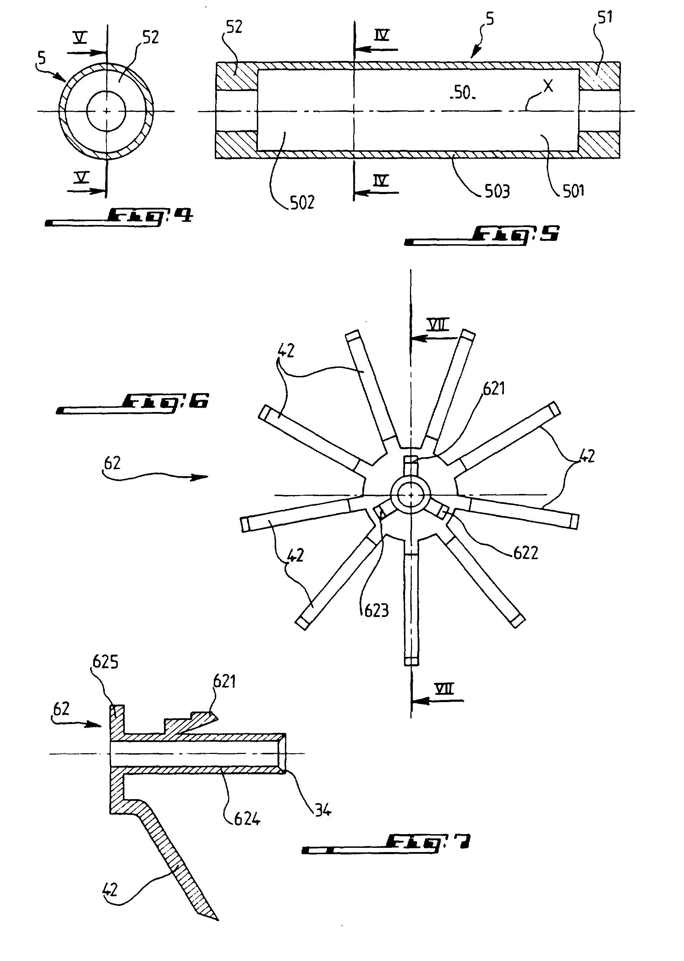

Le dispositif de l'invention est remarquable en ce qu'il comprend une âme rigide telle que 2 (figures 1 à 3) ou 7 (figures 8, 9, 10, 17, 18), s'étendant suivant un axe longitudinal X et reliée aux moyens de retenue 4a, 4b, ainsi qu'une enveloppe gonflable 5 supportée par cette âme rigide 2, 7.

Selon un second aspect essentiel de l'invention, l'enveloppe 5 présente une paroi latérale 503 qui délimite en partie au moins la chambre 50, et qui fait face à une paroi 10 de la canalisation 1.

Selon un troisième aspect essentiel de l'invention, les moyens d'admission contrôlée 3, 3bis sont calibrés pour autoriser sélectivement l'établissement du débit de fluide à travers l'extrémité amont 501 de la chambre 50, au moins jusqu'à permettre un gonflement de l'enveloppe 5, lorsque la perte de charge dans la canalisation de part et d'autre du dispositif est supérieure à un premier seuil déterminé F32, l'enveloppe gonflable 5 obturant alors la canalisation 1, de façon au moins partielle, par déplacement radial de sa paroi latérale 503 vers la paroi 10 de la canalisation 1.

Les moyens de retenue 4a, 4b comprennent de préférence une pluralité de griffes 41, 41a, 41b, 42, chaque griffe 41, 41a, 41b, 42 présentant une extrémité liée 410, 420 solidaire de l'âme rigide 2, 7 et une extrémité libre 411, 421.

Par ailleurs, chaque griffe adopte sélectivement une position repliée R pour laquelle son extrémité libre 411, 421 est relativement proche de l'axe longitudinal X de l'âme 2 ou 7, et une position déployée D, pour laquelle son extrémité libre 411, 421 est relativement éloignée de l'axe longitudinal X, chaque griffe 41, 42 étant de préférence sollicitée élastiquement vers sa position déployée D.

L'âme rigide telle que 2 ou 7 présente un diamètre transversal S sensiblement inférieur au diamètre S_{T} de la canalisation 1, tandis que chaque griffe 41, 41a, 41b, 42 présente avantageusement une longueur déterminée L supérieure à la moitié du diamètre S de l'âme 2 ou 7.

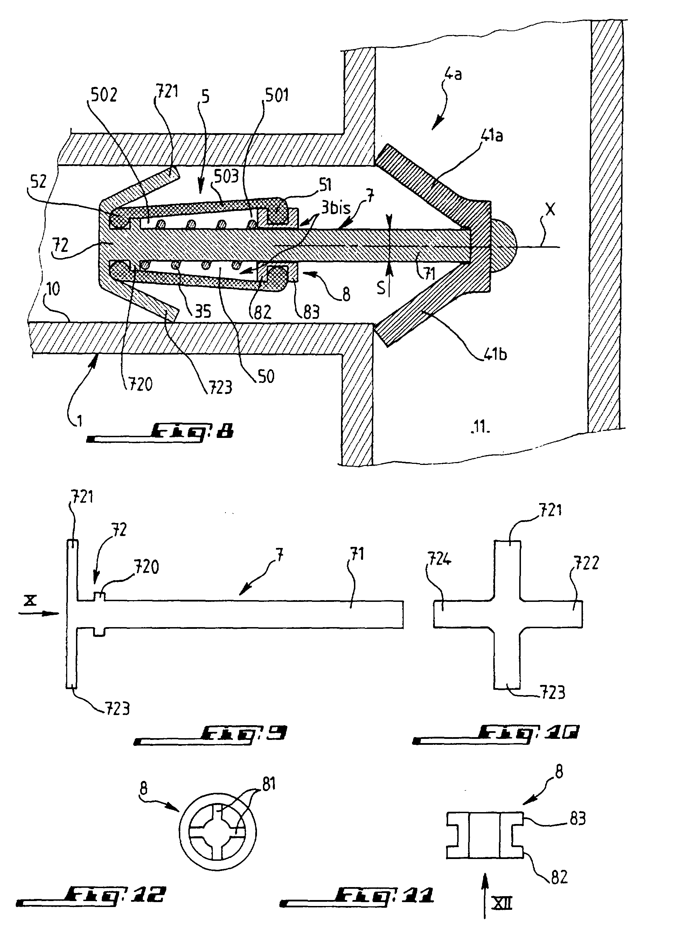

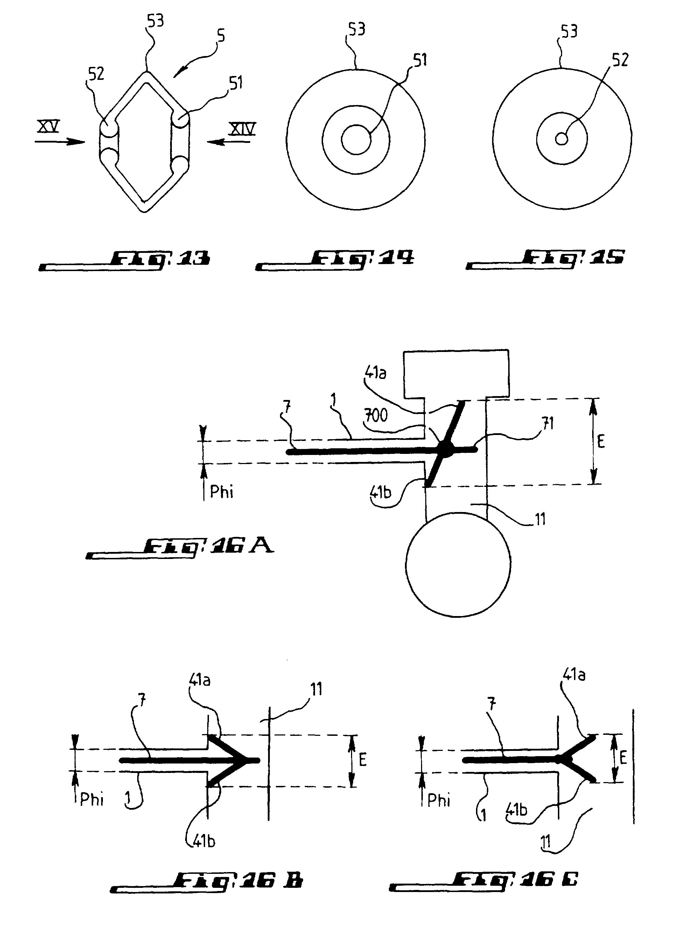

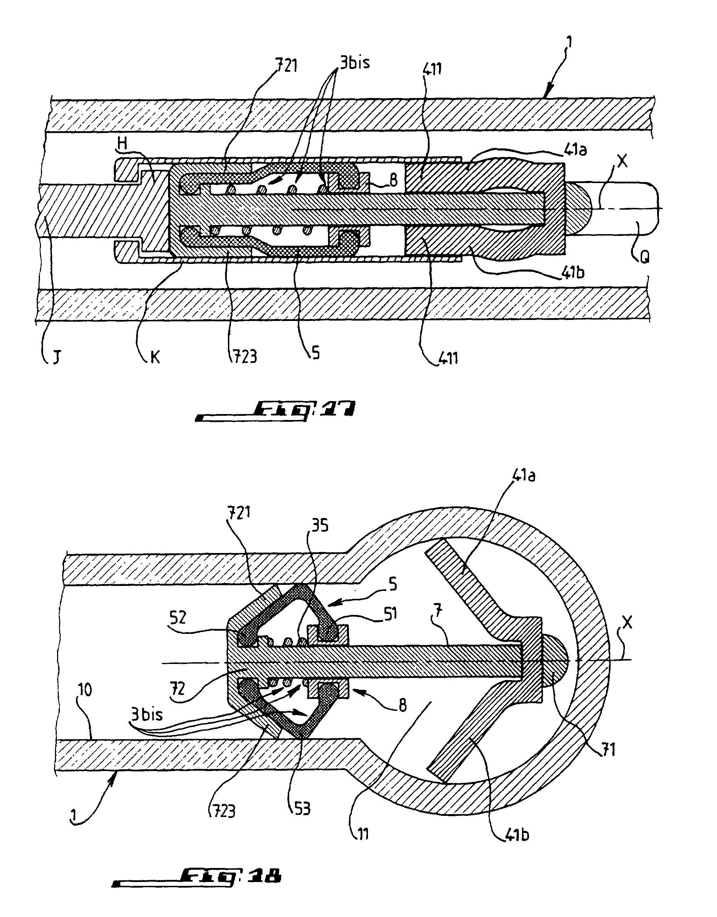

Selon le premier mode de réalisation illustré aux figures 1 à 7, l'âme rigide est formé d'un corps 2, et les moyens d'admission contrôlée sont constitués par un clapet 3.

Le corps 2 est délimité par une paroi tubulaire 20 et présente une extrémité amont 21 percée d'un orifice d'entrée 210, et une extrémité aval 22 percée d'un orifice de sortie 220, l'extrémité aval 22 succédant à l'extrémité amont dans le sens d'écoulement du gaz.

Le clapet 3, qui est logé dans le corps 2 entre les orifices d'entrée 210 et de sortie 220, est conçu pour être sensible à la perte de charge due au dispositif dans la canalisation 1, c'est-à-dire, en l'occurrence, à la différence entre les pressions qu'exerce respectivement le gaz dans des zones amont 12 et aval 13 de la canalisation, de part et d'autre du dispositif.

L'enveloppe gonflable 5, par exemple réalisée en un matériau élastomère, est alors disposée à l'extérieur du corps et gaine, de façon étanche, une partie au moins de la paroi tubulaire 20 du corps, cette partie de la paroi du corps étant traversée par un ou plusieurs perçages tels que 231, 232 et 233, prenant, dans l'exemple illustré, la forme de fentes longitudinales.

Autrement dit, bien que l'enveloppe 5 puisse gainer le corps 2 sur toute sa longueur comme le montre la figure 1, il serait tout à fait possible de prévoir que cette enveloppe 5 ne gaine qu'une section utile seulement de la longueur du corps, pour autant que le ou les perçages tels que 231 soient pratiqués dans la partie de la paroi 20 du corps qui est gainée de façon étanche par l'enveloppe 5.

Ce dispositif comporte, aux extrémités amont 21 et aval 22 du corps, des embouts amont 61 et aval 62 respectifs, dont chacun présente un ergot d'assemblage tel que 611 et 621, élastiquement inséré dans le perçage 231 de la paroi 20 du corps 2.

Ces embouts amont 61 et aval 62 présentent également des cheminées amont et aval respectives, 614 et 624, engagées dans le corps 2 et dont chacune est enserrée de façon étanche dans un bourrelet amont et aval correspondant, 51 et 52, de l'enveloppe 5, au-delà d'une extrémité correspondante 210, 220 du corps 2.

Les cheminées amont 614 et aval 624 sont bordées, hors du corps, par des collerettes annulaires amont et aval respectives, 615 et 625, en périphérie desquelles se rattachent, par des extrémités liées 410 et 420, des griffes amont 41 et aval 42 correspondantes, ces griffes constituant les organes de retenue précédemment évoqués.

Chaque griffe telle que 41 ou 42 peut adopter une position repliée R, pour laquelle son extrémité libre telle que 411 ou 421 est relativement proche du corps 2, ou une position déployée D, pour laquelle son extrémité libre telle que 411 ou 421 est relativement éloignée du corps 2.

Chaque griffe telle que 41 ou 42 est de surcroît élastiquement sollicitée vers sa position déployée D, soit grâce à l'élasticité intrinsèque du matériau dont elle est constituée, soit grâce à l'élasticité du bourelet 51 ou 52 de l'enveloppe 5 sur lequel elle s'appuie, soit grâce à l'ensemble de ces deux effets, les griffes amont 41 et les griffes aval 42 se déployant en parapluie suivant des mouvements respectifs, de R à D, de directions antagonistes, et plus précisément en s'éloignant les unes des autres.

Le corps 2 présente un diamètre transversal S sensiblement inférieur au diamètre S_{T} de la canalisation, tandis que les griffes 41, 42 ont une longueur L supérieure à la moitié du diamètre S du corps, et par exemple au moins égale à ce diamètre, pour pouvoir atteindre la paroi 10 de la canalisation 1 et s'y accrocher en parcourant, de leur position repliée R à leur position déployée D, un angle inférieur à 90 degrés.

Le clapet 3 comprend par exemple un ressort hélicoïdal 31 enfilé sur la cheminée aval 624 et précontraint en compression, un siège de clapet amont 32 formé par une extrémité interne de la cheminée amont 614, et une bille 33 élastiquement sollicitée contre le siège de clapet amont 32 par le ressort hélicoïdal 31.

Lorsque le dispositif est conçu pour obturer totalement la canalisation en cas de débit excessif, le clapet 3 comprend également un siège de clapet aval 34 formé par une extrémité interne de la cheminée aval 624, et destiné à coopérer avec la bille 33.

Le dispositif décrit jusqu'à présent, en référence aux figures 1 à 7, est assemblé de la façon suivante.

Tout d'abord, le corps 2 est enfilé dans l'enveloppe 5 de manière que les bourrelets 51 et 52 de celle-ci s'appuient tous deux sur la partie externe de la paroi 20.

L'embout aval 62 est alors monté sur le corps 2 par insertion des ergots 621, 622, et 623 dans les fentes 231, 232, et 233.

Puis, le ressort 31 et la bille 33 sont introduits dans le corps 2 par l'extrémité amont 210 de ce dernier.

L'embout amont 61 est ensuite monté sur le corps 2 par insertion des ergots tels que 611 dans les fentes 231, 232, et 233 correspondantes.

Enfin, les bourrelets 51 et 52 sont glissés vers l'extérieur jusqu'à ce qu'ils viennent enserrer les cheminées 614 et 624.

Pour la mise en place du dispositif dans la canalisation, les griffes 41 et 42 doivent être placées dans leur position repliée R, notamment pour permettre au dispositif de progresser dans la canalisation malgré l'existence de restrictions de diamètre de celle-ci, telles que 101, après quoi ces griffes doivent prendre leur position déployée D pour assurer l'ancrage du dispositif dans la canalisation.

Cette mise en place peut être réalisée de diverses manières.

Par exemple, le dispositif peut être temporairement placé dans un fourreau relié à un cordon et maintenant repliées les griffes 41 et 42. Le dispositif est ensuite poussé dans la canalisation au moyen d'un jonc flexible engagé dans la canalisation en même temps que le cordon. Lorsque le dispositif a été placé dans la canalisation à l'endroit requis, ses griffes sont libérées par une traction du cordon alors que le jonc flexible continue à être maintenu en place. Puis, le jonc flexible est extrait de la canalisation, l'ensemble de ces opérations pouvant même être effectuées à travers un presse-étoupe si la canalisation est déjà remplie de gaz.

Une seconde possibilité, parmi d'autres encore, consiste à maintenir les extrémités libres 411 et 421 des griffes rapprochées les unes des autres, pendant la mise en place du dispositif, au moyen d'un lien relativement fragile ultérieurement rompu par le gonflage intentionnel de l'enveloppe 5.

Le fonctionnement du dispositif décrit jusqu'à présent est le suivant.

Le ressort 31 applique la bille 33 sur le siège de clapet 32 avec une force F32 telle que le gaz circulant normalement dans la canalisation 1 ne parvient pas à repousser la bille 33, donc à pénétrer dans le corps 2 au-delà de l'entrée de la cheminée amont 614.

En cas de rupture de la canalisation 1 en aval du dispositif, c'est-à-dire en l'occurrence à gauche du dispositif tel qu'illustré à la figure 1, la différence de pression entre les zones amont 12 et aval 13 augmente, notamment en raison des obstacles que constituent les griffes 41 et 42 pour un débit de gaz anormalement élevé, au point que le gaz repousse la bille 33, pénètre dans le corps 2 et gonfle l'enveloppe 5 à travers les fentes 231, 232, 233.

Le gonflement de l'enveloppe crée pour le gaz un obstacle supplémentaire, augmentant encore la différence de pression entre les zones amont 12 et aval 13.

Le gonflage de l'enveloppe 5, qui est ainsi un phénomène à rétroaction positive, se poursuit donc de plus en plus facilement jusqu'à ce que la différence de pression entre les zones amont 12 et aval 13 soit telle que le ressort 31 est repoussé au point que la bille 33 s'applique sur le siège de clapet aval 34 formé sur la cheminée aval 624.

La canalisation 1 se trouve ainsi obturée d'une part par application de l'enveloppe 5 contre la face interne de la canalisation et d'autre part par application de la bille 33 sur le siège 34.

Si l'enveloppe 5 est élastique et par exemple réalisée en un matériau élastomère, le dispositif peut aisément, après réparation de la canalisation, être replacé dans son état initial par application, dans la canalisation, d'une contre-pression réduisant, annulant ou renversant la différence de pression entre les zones amont 12 et aval 13.

Le procédé mis en oeuvre dans le dispositif tel qu'illustré comprend d'abord une première mesure consistant à placer dans la canalisation 1 une membrane radialement déformable, en l'occurrence constituée par l'enveloppe 5, susceptible de partager le fluide circulant dans la canalisation 1 en une veine Vi, interne à cette membrane, et une veine Ve, externe à cette membrane.

Plus précisément, les veines interne Vi et externe Ve sont choisies de façon telle que leurs sections transversales respectives soient susceptibles de varier tout en restant complémentaires l'une de l'autre par rapport à la section transversale de la canalisation.

Le procédé mis en oeuvre dans le dispositif tel qu'illustré comprend une seconde mesure, qui consiste à empêcher le fluide non présent dans la veine interne Vi d'y pénétrer suivant le sens d'écoulement aussi longtemps que la pression différentielle exercée par le fluide entre les zones amont 12 et aval 13 est au plus égale à un premier seuil, qui correspond en l'occurrence à la précontrainte F32 du ressort 31.

Le procédé mis en oeuvre dans le dispositif tel qu'illustré comprend par ailleurs une troisième mesure, qui consiste à admettre, dans la veine interne Vi, le fluide circulant dans le sens d'écoulement lorsque la pression différentielle exercée par le fluide entre les zones amont 12 et aval 13 dépasse le premier seuil F32.

Enfin, le procédé de l'invention mis en oeuvre dans le dispositif tel qu'illustré aux figures 1 à 7 comprend une quatrième mesure, qui consiste à interdire au fluide de sortir de la veine interne Vi en suivant le sens d'écoulement au moins lorsque la pression différentielle exercée par le fluide entre les zones amont 12 et aval 13 dépasse un second seuil F34, qui correspond en l'occurrence à la force qui doit être exercée, à l'encontre de la force développée par le ressort 31, pour appliquer la bille 33 sur le siège 34.

Les figures 8 à 18 illustrent un second mode de réalisation du dispositif de l'invention, dans lequel l'âme rigide est constituée par un fût 7.

Une extrémité aval 52 de l'enveloppe gonflable 5, qui délimite l'extrémité aval 502 de la chambre 50, enserre fixement et de façon étanche l'extrémité aval correspondante 72 du fût 7.

Par exemple, l'extrémité aval 52 de l'enveloppe 5 est conformée en bourrelet et se trouve calée entre une collerette 720 du fût 7 et la base de pattes de centrage 721 à 724, ces pattes étant fixées de façon souple ou flexible à l'extrémité aval 72 du fût 7 et étant capables de s'épanouir radialement autour du fût 7 pour le centrer dans la canalisation 1.

L'extrémité amont 51 de l'enveloppe gonflable 5, qui délimite l'extrémité amont 501 de la chambre 50, est quant à elle fixée sur un manchon 8, lui-même monté coulissant sur le fût 7.

Par exemple, le manchon 8 présente deux extensions radiales 82 et 83 entre lesquelles est insérée l'extrémité amont 51 de l'enveloppe gonflable 5, conformée en bourrelet.

Dans ce second mode de réalisation, les moyens d'admission contrôlée comprennent essentiellement un ou plusieurs interstices, tels que 81, définis entre le manchon 8 et le fût 7.

Néanmoins, ces moyens d'admission contrôlée 3bis peuvent aussi comprendre, comme le montrent les figures 8 et 18, un ressort de tension 35, de préférence précontraint, qui écarte l'une de l'autre les extrémités amont et aval 51, 52 de l'enveloppe 5, suivant la direction axiale X du fût 7.

En plus de ce ressort de tension 35, ou à la place de ce dernier, les moyens d'admission contrôlée 3bis peuvent aussi inclure une variation de section non monotone 53 de l'enveloppe 5, cette enveloppe présentant alors par exemple un ou plusieurs soufflets (figures 13 et 18), ou un renflement de forme quelconque, propre à augmenter la perte de charge entre la zone amont et la zone aval du dispositif dans la canalisation 1.

Les moyens de retenue 4a comprennent des griffes, par exemple deux griffes 41a et 41b, fixées à l'extrémité amont 71 du fût 7.

Ces griffes, qui peuvent prendre des formes diverses, peuvent en outre être montées de diverses manières par rapport au fût 7.

En particulier, les griffes 41a, 41b peuvent être montées à rotation autour d'un axe 700 porté par l'extrémité 71 du fût 7 comme le montre la figure 16A, ou être élastiquement liées à cette extrémité, comme le montrent les figures 16B et 16C.

Si les détails de réalisation de ces griffes sont indifférents, l'installation du dispositif de l'invention peut en revanche revêtir une grande importance.

Une façon recommandée d'optimiser l'installation du dispositif de l'invention consiste à faire en sorte que les deux griffes 41a, 41b atteignent un conduit de raccordement 11 transversal à la canalisation 1 pour pouvoir, en position déployée, être séparées l'une de l'autre par un espace E supérieur au diamètre Phi de cette canalisation (figures 16A à 16C), à l'endroit où se trouve retenue l'enveloppe 5 du dispositif.

Comme le montre la figure 17, le dispositif de l'invention peut être mis en place dans la canalisation au moyen d'un jonc flexible J dont l'extrémité porte une douille K.

A cette fin, ce dispositif présente, en position repliée des griffes 41a, 41b et en configuration de repos de l'enveloppe, une forme telle qu'il tient dans un cylindre de faible diamètre, de sorte qu'il peut être inséré dans la douille de mise en place K.

Cette douille K est par exemple terminée par deux doigts d'appui tels que Q, le dispositif étant inséré dans la douille de manière que les griffes 41a, 41b soient disposées en quinconce par rapport aux doigts Q.

Le jonc flexible J est terminé par un poussoir H monté mobile dans la douille K pour pouvoir expulser le dispositif hors de la douille lorsque les doigts Q viennent buter sur la paroi d'un conduit de raccordement transversal 11.

Les griffes, jusqu'alors maintenues en position repliée vers l'axe X du fût 7, peuvent s'épanouir élastiquement vers leur position déployée et ancrer le dispositif dans la canalisation. Le retrait du jonc va entraîner la douille K via le poussoir H, ce qui va permettre l'extraction hors de la douille, du dispositif maintenu en place dans la canalisation par ses griffes.

Le procédé de l'invention, tel qu'il est mis en oeuvre par le dispositif conforme au second mode de réalisation, est identique au procédé mis en oeuvre par le dispositif illustré aux figures 1 à 7, à ceci près qu'il ne prend en compte que le premier seuil de fonctionnement F32, la quatrième mesure de ce procédé consistant simplement à interdire au fluide de sortir de la veine interne Vi en suivant le sens d'écoulement quelle que soit la pression différentielle exercée par le fluide entre les zones amont 12 et aval 13.

Comme le comprendra l'homme de l'art à la lecture de la présente description, les moyens d'admission contrôlée pourraient prendre encore d'autres formes que celles qui ont été décrites et illustrées, en particulier si le fluide circulant dans la canalisation est un liquide et/ou si ce fluide est susceptible d'accumuler une énergie cinétique importante en cas de rupture de la canalisation.

Dans ce cas, il serait par exemple envisageable, en se référant au premier mode de réalisation illustré aux figures 1 à 7, de se dispenser du ressort 31 et de la bille 33, d'obturer de façon permanente la cheminée aval 624, et de dimensionner l'enveloppe 5, réalisée en un matériau élastomère, de façon telle que cette enveloppe gaine le corps 2 avec une précontrainte radiale déterminée.

Dans ces conditions, le seuil de déclenchement ne serait plus déterminé par la précontrainte longitudinale du ressort 31, mais par la précontrainte radiale de l'enveloppe 5 sur le corps 2, le procédé se réduisant alors à placer dans la canalisation 1 une membrane radialement déformable 5, susceptible de partager le fluide circulant dans la canalisation 1 en une veine Vi, interne à cette membrane, et une veine Ve, externe à cette membrane, ces veines étant choisies de façon telle que leurs sections transversales respectives soient susceptibles de varier tout en restant complémentaires l'une de l'autre par rapport à la section transversale de la canalisation, et à n'autoriser une dilatation radiale de la veine interne Vi que lorsque la pression différentielle exercée par le fluide entre les zones amont 12 et aval 13 atteint un seuil pour lequel cette pression peut vaincre la précontrainte radiale de la membrane 5.

Un tel troisième mode de réalisation offrirait, par rapport aux deux premiers, l'avantage de présenter une plus grande simplicité structurelle.

Néanmoins, aucun des trois modes de réalisation présentés ou évoqués ne saurait être considéré comme équivalent à l'un quelconque des deux autres sur tous les plans, chaque mode de réalisation présentant, notamment en matière de reproductibilité du seuil de déclenchement, de tenue dans le temps de ce seuil, et de capacité à résister à toute migration indésirée dans la canalisation, des spécificités propres qui peuvent conduire à préférer l'un ou l'autre de ces modes, ou à en combiner certaines caractéristiques, en fonction des applications particulières envisagées.

## Revendications

1. Dispositif de sécurité sélectivement introduit dans une canalisation de fluide pour la protéger contre un débit excessif du fluide qui y circule, ce dispositif comprenant : une chambre (50) présentant une extrémité amont (501) et une extrémité aval (502); des moyens d'admission contrôlée (3, 3bis), sensibles à une perte de charge dans la canalisation (1) entre les extrémités amont et aval (501, 502) de la chambre, pour autoriser ou interdire sélectivement l'établissement d'un débit de fluide à travers l'extrémité amont (501) de la chambre; des moyens de retenue (4a, 4b) pour maintenir la chambre (50) en place dans la canalisation (1) et une âme rigide (2, 7) reliée aux moyens de retenue (4a, 4b) **caractérisé en ce qu'**il comprend une enveloppe gonflable (5) supportée par l'âme rigide (2, 7), cette enveloppe présentant une paroi latérale (503) qui délimite en partie au moins la chambre (50), et qui fait face à une paroi (10) de la canalisation (1), **en ce que** les moyens d'admission contrôlée (3, 3bis) sont calibrés pour autoriser sélectivement l'établissement du débit de fluide à travers l'extrémité amont (501) de la chambre (50) au moins jusqu'à permettre un gonflement de l'enveloppe (5), lorsque la perte de charge est supérieure à un premier seuil déterminé (F32), et **en ce que** l'enveloppe gonflable (5) obture la canalisation (1), de façon sélective et au moins partielle, par déplacement radial de sa paroi latérale (503) vers la paroi (10) de la canalisation (1).

2. Dispositif de sécurité suivant la revendication 1, **caractérisé en ce que** l'âme s'étend suivant un axe longitudinal (X) et **en ce que** les moyens de retenue (4a, 4b) comprennent une pluralité de griffes (41, 41a, 41b, 42), chaque griffe (41, 41a, 41b, 42) présentant une extrémité liée (410, 420) solidaire de l'âme rigide (2, 7) et une extrémité libre (411, 421), et adoptant sélectivement une position repliée (R) pour laquelle son extrémité libre (411, 421) est relativement proche de l'axe longitudinal (X), et une position déployée (D), pour laquelle son extrémité libre (411, 421) est relativement éloignée de l'axe longitudinal (X).

3. Dispositif de sécurité suivant la revendication 2, **caractérisé en ce que** chaque griffe (41, 41a, 41b, 42) est élastiquement sollicitée vers sa position déployée (D).

4. Dispositif de sécurité suivant l'une quelconque des revendications 2 et 3, **caractérisé en ce que** l'âme rigide (2, 7) présente un diamètre transversal déterminé (S), **en ce que** chaque griffe (41, 41a, 41b, 42) présente une longueur déterminée (L), et **en ce que** l'une des griffes (41, 41a, 41b, 42) au moins a une longueur (L) supérieure à la moitié du diamètre (S) de l'âme (2, 7).

5. Dispositif de sécurité suivant l'une quelconque des revendications précédentes, **caractérisé en ce que** l'âme rigide comprend un corps (2) délimité par une paroi tubulaire (20) et présentant une extrémité amont (21) et une extrémité aval (22), **en ce que** les moyens d'admission contrôlée comprennent un clapet (3) sensible à une perte de charge, supporté par le corps (2) et disposé entre les extrémités amont et aval du corps (2), et **en ce que** l'enveloppe gonflable (5) est externe au corps et gaine, de façon étanche, une section de longueur utile de la paroi tubulaire (20) dans laquelle est pratiqué au moins un premier perçage (231).

6. Dispositif de sécurité suivant la revendication 5, **caractérisé en ce qu'**il comprend, à l'une au moins des extrémités amont (21) et aval (22) du corps, un embout amont (61) ou aval (62) correspondant, portant des moyens de retenue amont (4a) ou aval (4b) correspondants, et présentant au moins un premier ergot d'assemblage (611, 621) élastiquement inséré dans le premier perçage (231).

7. Dispositif de sécurité suivant la revendication 6, **caractérisé en ce qu'**il comprend, aux extrémités amont (21) et aval (22) du corps, des embouts amont (61) et aval (62) respectifs, présentant des cheminées amont (614) et aval (624) respectives insérées dans le corps (2).

8. Dispositif de sécurité suivant la revendication 7, **caractérisé en ce que** le clapet (3) comprend un ressort hélicoïdal (31) enfilé sur la cheminée aval (624), un siège de clapet amont (32) formé par une extrémité interne de la cheminée amont (614), et une bille (33) élastiquement sollicitée contre le siège de clapet amont (32) par le ressort hélicoïdal (31).

9. Dispositif de sécurité suivant la revendication 8, **caractérisé en ce que** le clapet (3) comprend un siège de clapet aval (34) formé par une extrémité interne de la cheminée aval (624), et coopérant avec la bille (33).

10. Dispositif de sécurité suivant l'une quelconque des revendications 2 à 4 combinée à la revendication 7, **caractérisé en ce que** l'une au moins des cheminées amont (614) et aval (624) est bordée, hors du corps, par une collerette annulaire (615, 625) correspondante, en périphérie de laquelle se rattachent, par leur extrémité liée (410, 420), des griffes amont (41) ou aval (42) correspondantes.

11. Dispositif de sécurité suivant la revendication 10, **caractérisé en ce qu'**il comprend à la fois des griffes amont (41) et des griffes aval (42), se déployant en parapluie suivant des mouvements respectifs (de R à D) de directions antagonistes.

12. Dispositif de sécurité suivant l'une quelconque des revendications précédentes combinée à la revendication 7, **caractérisé en ce que** l'enveloppe (5) présente des bourrelets amont et aval (51, 52) débordant respectivement les extrémités amont et aval (210, 220) du corps et enserrant respectivement, de façon étanche, les cheminées amont et aval (614, 624).

13. Dispositif de sécurité suivant l'une quelconque des revendications précédentes combinée à la revendication 5, **caractérisé en ce que** le premier perçage (231) au moins est constitué par une fente longitudinale du corps.

14. Dispositif de sécurité suivant l'une quelconque des revendications 1 à 4, **caractérisé en ce que** l'âme rigide comprend un fût (7), **en ce qu'**une extrémité aval (52) de l'enveloppe gonflable (5), délimitant l'extrémité aval (502) de la chambre (50), enserre fixement et de façon étanche une extrémité aval (72) du fût (7), **en ce qu'**une extrémité amont (51) de l'enveloppe gonflable (5), délimitant l'extrémité amont (501) de la chambre (50), est fixée sur un manchon (8) monté coulissant sur le fût (7), et **en ce que** les moyens d'admission contrôlée (3, 3bis) comprennent au moins un interstice (81) défini entre le manchon (8) et le fût (7).

15. Dispositif de sécurité suivant la revendication 14, **caractérisé en ce que** les moyens d'admission contrôlée (3, 3bis) comprennent en outre un ressort de tension (35), écartant l'une de l'autre les extrémités amont et aval (51, 52) de l'enveloppe (5).

16. Dispositif de sécurité suivant la revendication 15, **caractérisé en ce que** le ressort de tension (35) est précontraint.

17. Dispositif de sécurité suivant l'une quelconque des revendications 14 à 16, **caractérisé en ce que** les moyens d'admission contrôlée (3, 3bis) comprennent en outre une variation de section non monotone (53) de l'enveloppe (5).

18. Dispositif de sécurité suivant l'une quelconque des revendications 14 à 17 combinée à l'une quelconque des revendications 2 à 4, **caractérisé en ce que** les griffes (41a, 41b) sont fixées à une extrémité amont (71) du fût (7).

19. Dispositif de sécurité suivant la revendication 18, **caractérisé en ce que** la chambre est introduite dans une canalisation (1) de diamètre maximal (Phi) déterminé et **en ce que** les extrémités libres (411) d'au moins deux griffes (41a, 41b) sont, en position déployée, séparées l'une de l'autre par un espace (E) supérieur au diamètre maximal (Phi) déterminé.

20. Dispositif de sécurité suivant la revendication 19, **caractérisé en ce qu'**il est conformé pour pouvoir, en position repliée des griffes (41a, 41b), être inséré dans une douille de mise en place (K) terminée par au moins un doigt d'appui (Q), cette douille étant sélectivement introduite dans la canalisation (1) au moyen d'un jonc flexible (J) terminé par un poussoir (H) mobile dans la douille (K) et propre à expulser le dispositif hors de la douille.

21. Dispositif de sécurité suivant l'une quelconque des revendications 14 à 20, **caractérisé en ce qu'**il comprend des pattes de centrage (721 à 724) fixées de façon souple ou flexible à l'extrémité aval (72) du fût (7) et s'épanouissant radialement autour du fût (7).

22. Dispositif de sécurité suivant l'une quelconque des revendications précédentes, **caractérisé en ce que** le fluide est gazeux.

23. Dispositif de sécurité suivant l'une quelconque des revendications précédentes, **caractérisé en ce que** l'enveloppe (5) est élastique.

24. Procédé pour protéger contre un débit excessif une canalisation (1) de section transversale déterminée dans laquelle circule, dans un sens d'écoulement déterminé, un fluide susceptible d'exercer entre des zones amont et aval de la canalisation une pression différentielle variable, ce procédé utilisant une variation de la pression différentielle, lorsqu'elle est supérieure à un premier seuil déterminé (F32), pour obturer une veine d'écoulement définie dans la canalisation, **caractérisé en ce qu'**il comprend les modalités et opérations consistant à : partager, au moyen d'une membrane (5) radialement déformable, le fluide circulant sélectivement dans la canalisation en une veine (Vi) interne à la membrane et une veine (Ve) externe à la membrane, les veines interne et externe ayant des sections transversales respectives sélectivement variables et complémentaires l'une de l'autre par rapport à la section transversale (S_{T}) de la canalisation; empêcher le fluide non présent dans la veine interne (Vi) d'y pénétrer suivant le sens d'écoulement aussi longtemps que la pression différentielle exercée par le fluide est au plus égale à un premier seuil (F32); admettre dans la veine interne (Vi) le fluide circulant dans le sens d'écoulement lorsque la pression différentielle exercée par le fluide dépasse le premier seuil (F32); et interdire au fluide de sortir de la veine interne (Vi) en suivant le sens d'écoulement, au moins lorsque la pression différentielle exercée par le fluide dépasse un second seuil (F34).

## Patentansprüche

1. Sicherheitsvorrichtung, die selektiv in eine Fluid-Rohrleitung eingeführt wird, um sie vor einer übermäßigen Durchflussmenge von darin fließendem Fluid zu schützen, wobei diese Vorrichtung enthält: eine Kammer (50) mit einem vorderen Ende (501) und einem hinteren Ende (502); Zulaufkontrollmittel (3, 3bis), die gegenüber einem Druckverlust in der Rohrleitung (1) zwischen dem vorderen und dem hinteren Ende (501, 502) der Kammer empfindlich sind, um einen Durchfluss des Fluids durch das vordere Ende (501) der Kammer selektiv zu gestatten bzw. zu unterbinden; Haltemittel (4a, 4b), um die Kammer (50) in der Rohrleitung (1) in Stellung zu halten, und einen starren Kern (2, 7), der mit den Haltemitteln (4a, 4b) verbunden ist, **dadurch gekennzeichnet, dass** sie eine anschwellbare Hülle (5) enthält, die vom starren Kern (2, 7) getragen wird, wobei diese Hülle eine Seitenwand (503) aufweist, welche zumindest teilweise die Kammer (50) begrenzt und einer Wand (10) der Rohrleitung (1) zugewandt ist, dass die Zulaufkontrollmittel (3, 3bis) kalibriert sind, um selektiv einen Durchfluss des Fluids durch das vordere Ende (501) der Kammer (50) zu gestatten, bis zumindest ein Anschwellen der Hülle (5) möglich ist, wenn der Druckverlust über einem vorbestimmten ersten Schwellwert (F32) liegt, und dass die anschwellbare Hülle (5) die Rohrleitung selektiv und zumindest teilweise durch radiales Verstellen ihrer Seitenwand (503) zur Wand (10) der Rohrleitung (1) hin versperrt.

2. Sicherheitsvorrichtung nach Anspruch 1, **dadurch gekennzeichnet, dass** der Kern entlang einer Längsachse (X) verläuft und dass die Haltemittel (4a, 4b) eine Mehrzahl von Klauen (41, 41 a, 41 b, 42) enthalten, wobei jede Klaue (41, 41 a, 41 b, 42) ein mit dem starren Kern (2, 7) verbundenes festes Ende (410, 420) und ein freies Ende (411, 421) aufweist und selektiv eine zurückgezogene Stellung (R), in welcher ihr freies Ende (411, 421) relativ nahe an der Längsachse (X) liegt, und eine ausgefahrene Stellung (D) einnimmt, in welcher ihr freies Ende (411, 421) von der Längsachse (X) relativ entfernt liegt.

3. Sicherheitsvorrichtung nach Anspruch 2, **dadurch gekennzeichnet, dass** jede Klaue (41, 41 a, 41 b, 42) elastisch in ihre ausgefahrene Stellung (D) beaufschlagt wird.

4. Sicherheitsvorrichtung nach einem der Ansprüche 2 und 3, **dadurch gekennzeichnet, dass** der starre Kern (2, 7) einen bestimmten Querdurchmesser (S) aufweist, dass jede Klaue (41, 41 a, 41 b, 42) eine bestimmte Länge (L) aufweist und dass zumindest eine der Klauen (41, 41 a, 41 b, 42) eine Länge (L) hat, die größer als der halbe Durchmesser (S) des Kerns (2, 7) ist.

5. Sicherheitsvorrichtung nach einem der vorangehenden Ansprüche, **dadurch gekennzeichnet, dass** der starre Kern einen Körper (2) enthält, der von einer rohrförmigen Wand (20) begrenzt wird und ein vorderes Ende (21) und ein hinteres Ende (22) aufweist, dass die Zulaufkontrollmittel eine Ventilklappe (3) enthalten, die gegenüber einem Druckverlust empfindlich ist, vom Körper (2) getragen wird und zwischen dem vorderen und dem hinteren Ende des Körpers (2) angeordnet ist, und dass die anschwellbare Hülle (5) außerhalb des Körpers liegt und in dichter Weise einen Abschnitt geeigneter Länge der rohrförmigen Wand (20) umhüllt, in welchem zumindest eine erste Bohrung (231) ausgeführt ist.

6. Sicherheitsvorrichtung nach Anspruch 5, **dadurch gekennzeichnet, dass** sie zumindest an dem einen Ende des vorderen (21) und des hinteren Endes (22) des Körpers ein entsprechendes vorderes (61) bzw. ein hinteres Ansatzstück (62) enthält, welches entsprechende vordere (4a) bzw. hintere Haltemittel (4b) trägt und zumindest einen ersten Montagevorsprung (611, 621) aufweist, der elastisch in die erste Bohrung (231) eingefügt ist.

7. Sicherheitsvorrichtung nach Anspruch 6, **dadurch gekennzeichnet, dass** sie am vorderen (21) bzw. am hinteren Ende (22) des Körpers ein vorderes (61) bzw. ein hinteres Ansatzstück (62) enthält, das einen vorderen (614) bzw. einen hinteren Schacht (624) aufweist, der in den Körper (2) eingefügt ist.

8. Sicherheitsvorrichtung nach Anspruch 7, **dadurch gekennzeichnet, dass** die Ventilklappe (3) eine Spiralfeder (31) enthält, die auf den hinteren Schacht (624) aufgeschoben ist, einen vorderen Ventilsitz (32), der von einem inneren Ende des vorderen Schachts (614) gebildet ist, sowie eine Kugel (33), die elastisch über die Spiralfeder (31) gegen den vorderen Ventilsitz (32) beaufschlagt wird.

9. Sicherheitsvorrichtung nach Anspruch 8, **dadurch gekennzeichnet, dass** die Ventilklappe (3) einen hinteren Ventilsitz (34) enthält, der von einem inneren Ende des hinteren Schachts (624) gebildet wird und mit der Kugel (33) zusammenwirkt.

10. Sicherheitsvorrichtung nach einem der Ansprüche 2 bis 4 in Kombination mit Anspruch 7, **dadurch gekennzeichnet, dass** zumindest der eine vordere (614) bzw. hintere Schacht (624) außerhalb des Körpers von einem entsprechenden Ringbund (615, 625) eingefasst wird, an dessen Umfang die entsprechende vordere (41) bzw. hintere Klaue (42) mit ihrem festen Ende (410, 420) angebunden ist.

11. Sicherheitsvorrichtung nach Anspruch 10, **dadurch gekennzeichnet, dass** sie zugleich vordere Klauen (41) und hintere Klauen (42) enthält, die sich regenschirmartig entsprechend der jeweiligen Bewegungen (von R nach D) in entgegengesetzten Richtungen ausfahren.

12. Sicherheitsvorrichtung nach einem der vorangehenden Ansprüche in Kombination mit Anspruch 7, **dadurch gekennzeichnet, dass** die Hülle (5) eine vordere und eine hintere Wulst (51, 52) aufweist, welche das vordere bzw. das hintere Ende (210, 220) des Körpers überragt und in dichter Weise den vorderen bzw. hinteren Schacht (614, 624) umschließt.

13. Sicherheitsvorrichtung nach einem der vorangehenden Ansprüche in Kombination mit Anspruch 5, **dadurch gekennzeichnet, dass** zumindest die erste Bohrung (231) aus einem Längsschlitz des Körpers besteht.

14. Sicherheitsvorrichtung nach einem der vorangehenden Ansprüche 1 bis 4, **dadurch gekennzeichnet, dass** der starre Kern einen Schaft (7) enthält, dass ein das hintere Ende (502) der Kammer (50) begrenzendes hinteres Ende (52) der anschwellbaren Hülle (5) in fester und dichter Weise ein hinteres Ende (72) des Schafts (7) umschließt, dass ein das vordere Ende (501) der Kammer (50) begrenzendes vorderes Ende (51) der anschwellbaren Hülle (5) an einer am Schaft gleitbeweglich gelagerten Muffe (8) befestigt ist und dass die Zulaufkontrollmittel (3, 3bis) zumindest einen Zwischenraum (81) enthalten, der zwischen Muffe (8) und Schaft (7) definiert ist.

15. Sicherheitsvorrichtung nach Anspruch 14, **dadurch gekennzeichnet, dass** die Zulaufkontrollmittel (3, 3bis) ferner eine Spannfeder (35) enthalten, welche das vordere und das hintere Ende (51, 52) der Hülle (5) voneinander beabstandet.

16. Sicherheitsvorrichtung nach Anspruch 15, **dadurch gekennzeichnet, dass** die Spannfeder (35) vorgespannt ist.

17. Sicherheitsvorrichtung nach einem der Ansprüche 14 bis 16, **dadurch gekennzeichnet, dass** die Zulaufkontrollmittel (3, 3bis) ferner einen nicht gleichförmigen veränderlichen Querschnitt (53) für die Hülle (5) aufweisen.

18. Sicherheitsvorrichtung nach einem der Ansprüche 14 bis 17 in Kombination mit einem der Ansprüche 2 bis 4, **dadurch gekennzeichnet, dass** die Klauen (41a, 41b) an einem vorderen Ende (71) des Schafts (7) befestigt sind.

19. Sicherheitsvorrichtung nach Anspruch 18, **dadurch gekennzeichnet, dass** die Kammer in eine Rohrleitung (1) mit bestimmtem maximalen Durchmesser (Phi) eingeführt wird und dass die freien Enden (411) zumindest zweier Klauen (41a, 41b) in der ausgefahrenen Stellung durch einen Raum (E) voneinander getrennt werden, der größer ist als der bestimmte maximale Durchmesser (Phi).

20. Sicherheitsvorrichtung nach Anspruch 19, **dadurch gekennzeichnet, dass** sie so geformt ist, dass sie in der zurückgezogenen Stellung der Klauen (41a, 41b) in eine Einsetzhülse (K) eingefügt werden kann, die mit zumindest einem Abstützfinder (Q) endet, wobei diese Hülse selektiv in die Rohrleitung (1) eingeführt werden kann, und zwar mittels eines flexiblen Rings (J), der mit einem Schieber (H) abschließt, welcher in der Hülse (K) beweglich ist und die Vorrichtung aus der Hülse ausstoßen kann.

21. Sicherheitsvorrichtung nach einem der Ansprüche 14 bis 20, **dadurch gekennzeichnet, dass** sie Zentrierlaschen (721 bis 724) enthält, die nachgiebig bzw. flexibel am hinteren Ende (72) des Schafts (7) befestigt sind und sich radial um den Schaft (7) herum entfalten.

22. Sicherheitsvorrichtung nach einem der vorangehenden Ansprüche, **dadurch gekennzeichnet, dass** das Fluid gasförmig ist.

23. Sicherheitsvorrichtung nach einem der vorangehenden Ansprüche, **dadurch gekennzeichnet, dass** die Hülle (5) elastisch ist.

24. Verfahren zum Schutz einer Rohrleitung (1) mit bestimmten Querschnitt vor einer übermäßigen Durchflussmenge, in welcher in einer bestimmten Strömungsrichtung ein Fluid strömt, das zwischen einem vorderen und einem hinteren Bereich der Rohrleitung einen veränderlichen Differenzdruck ausüben kann, wobei bei diesem Verfahren eine Veränderung des Differenzdrucks genutzt wird, wenn er über einem bestimmten ersten Schwellwert (F32) liegt, um einen in der Rohrleitung definierten Strömungsfluss abzusperren, **dadurch gekennzeichnet, dass** es Merkmale und Vorgänge umfasst, die darin bestehen, dass mittels einer radial verformbaren Membran (5) das selektiv in der Rohrleitung strömende Fluid in einen innerhalb der Membran strömenden Fluss (Vi) und einen außerhalb der Membran strömenden Fluss (Ve) aufgeteilt wird, wobei der innere und der äußere Fluss jeweils einen gegenüber dem Querschnitt (S_{T}) der Rohrleitung selektiv veränderlichen und einander ergänzenden Querschnitt haben, dass das im inneren Fluss (Vi) nicht vorhandene Fluid daran gehindert wird, in Strömungsrichtung darin einzudringen, solange der von dem Fluid ausgeübte Differenzdruck höchstens gleich dem ersten Schwellwert (F32) ist, dass das in Strömungsrichtung fließende Fluid in den inneren Fluss (Vi) eingelassen wird, wenn der von dem Fluid ausgeübte Differenzdruck den ersten Schwellwert (F32) übersteigt, und dass ein Ausfließen des Fluids in Strömungsrichtung aus dem inneren Fluss (Vi) unterbunden wird, zumindest wenn der von dem Fluid ausgeübte Differenzdruck einen zweiten Schwellwert (F34) übersteigt.

## Claims

1. Safety device selectively introduced into a fluid duct to protect it against an excessive flow of the fluid circulating therein, this device comprising: a chamber (50) having an upstream end (501) and a downstream end (502); controlled-admission means (3, 3bis), sensitive to a head loss in the duct (1) between the upstream and downstream ends (501, 502) of the chamber, for selectively allowing or denying the establishment of a flow of fluid through the upstream end (501) of the chamber; retaining means (4a, 4b) for holding the chamber (50) in place in the duct (1), and a rigid core (2, 7) connected to the retaining means (4a, 4b), **characterized in that** it comprises an inflatable jacket (5) supported by the rigid core (2, 7), this jacket having a side wall (503) which at least partially delimits the chamber (50) and which faces a wall (10) of the duct (1), **in that** the controlled-admission means (3, 3bis) are calibrated to selectively allow the establishment of the flow of fluid through the upstream end (501) of the chamber (50), at least up to the point of permitting an inflation of the jacket (5) when the head loss is greater than a first defined threshold (F32), and **in that** the inflatable jacket (5) closes off the duct (1), selectively and at least partially, by radial displacement of its side wall (503) towards the wall (10) of the duct (1).

2. Safety device according to Claim 1, **characterized in that** the core extends along a longitudinal axis (X) and **in that** the retaining means (4a, 4b) comprise a plurality of claws (41, 41a, 41b, 42), each claw (41, 41a, 41b, 42) having a bound end (410, 420) fixedly connected to the rigid core (2, 7) and a free end (411, 421) and selectively adopting a folded-up position (R), for which its free end (411, 421) is relatively close to the longitudinal axis (X), and an opened-out position (D), for which its free end (411, 421) is relatively remote from the longitudinal axis (X).

3. Safety device according to Claim 2, **characterized in that** each claw (41, 41a, 41b, 42) is elastically pulled towards its opened-out position (D).

4. Safety device according to either of Claims 2 and 3, **characterized in that** the rigid core (2, 7) has a defined transverse diameter (S), **in that** each claw (41, 41a, 41b, 42) has a defined length (L), and **in that** one of the claws (41, 41a, 41b, 42) at least has a length (L) greater than half the diameter (S) of the core (2, 7).

5. Safety device according to any one of the preceding claims, **characterized in that** the rigid core comprises a body (2) delimited by a tubular wall (20) and having an upstream end (21) and a downstream end (22), **in that** the controlled-admission means comprise a flap valve (3) sensitive to a head loss, supported by the body (2) and disposed between the upstream and downstream ends of the body (2), and **in that** the inflatable jacket (5) is external to the body and encases, in a sealed manner, a section of useful length of the tubular wall (20) in which at least a first bore (231) is made.

6. Safety device according to Claim 5, **characterized in that** it comprises, at one at least of the upstream (21) and downstream (22) ends of the body, a corresponding upstream (61) or downstream (62) connector, bearing corresponding upstream (4a) or downstream (4b) retaining means and having at least a first assembly pin (611, 621) elastically inserted in the first bore (231).

7. Safety device according to Claim 6, **characterized in that** it comprises, at the upstream (21) and downstream (22) ends of the body, respective upstream (61) and downstream (62) connectors, having respective upstream (614) and downstream (624) shafts inserted in the body (2).

8. Safety device according to Claim 7, **characterized in that** the flap valve (3) comprises a helical spring (31) slipped over the upstream shaft (624), an upstream flap valve seat (32) formed by an inner end of the upstream shaft (614), and a ball (33) elastically pulled against the upstream flap valve seat (32) by the helical spring (31).

9. Safety device according to Claim 8, **characterized in that** the flap valve (3) comprises a downstream flap valve seat (34) formed by an inner end of the downstream shaft (624) and cooperating with the ball (33).

10. Safety device according to any one of Claims 2 to 4, combined with Claim 7, **characterized in that** one at least of the upstream (614) and downstream (624) shafts is flanged, outside the body, by a corresponding annular collar (615, 625), on whose periphery corresponding upstream (41) or downstream (42) claws are attached by their bound end (410, 420).

11. Safety device according to Claim 10, **characterized in that** it comprises both upstream claws (41) and downstream claws (42), opening out into an umbrella according to respective counterdirectional movements (from R to D).

12. Safety device according to any one of the preceding claims combined with Claim 7, **characterized in that** the jacket (5) has upstream and downstream flanges (51, 52) projecting respectively from the upstream and downstream ends (210, 220) of the body and respectively embracing, in a sealed manner, the upstream and downstream shafts (614, 624).

13. Safety device according to any one of the preceding claims combined with Claim 5, **characterized in that** the first bore (231) at least is constituted by a longitudinal slit in the body.

14. Safety device according to any one of Claims 1 to 4, **characterized in that** the rigid core comprises a drum (7), **in that** a downstream end (52) of the inflatable jacket (5), delimiting the downstream end (502) of the chamber (50), fixedly embraces, in a sealed manner, a downstream end (72) of the drum (7), **in that** an upstream end (51) of the inflatable jacket (5), delimiting the upstream end (501) of the chamber (50), is fixed on a sleeve (8) mounted in sliding arrangement on the drum (7), and **in that** the controlled-admission means (3, 3bis) comprise at least one gap (81) defined between the sleeve (8) and the drum (7).

15. Safety device according to Claim 14, **characterized in that** the controlled-admission means (3, 3bis) additionally comprise a tension spring (35), keeping apart the upstream and downstream ends (51, 52) of the jacket (5).

16. Safety device according to Claim 15, **characterized in that** the tension spring (35) is pretensioned.

17. Safety device according to any one of Claims 14 to 16, **characterized in that** the controlled-admission means (3, 3bis) additionally comprise a variation of non-monotonous section (53) of the jacket (5).

18. Safety device according to any one of Claims 14 to 17 combined with any one of Claims 2 to 4,
**characterized in that** the claws (41a, 41b) are fixed to an upstream end (71) of the drum (7).

19. Safety device according to Claim 18, **characterized in that** the chamber is introduced into a duct (1) of defined maximum diameter (Phi) and **in that** the free ends (411) of at least two claws (41a, 41b) are mutually separated, in opened-out position, by a space (E) greater than the defined maximum diameter (Phi).

20. Safety device according to Claim 19, **characterized in that** it is configured to be insertable, in the folded-up position of the claws (41a, 41b), into a mounting socket (K) terminated by at least one supporting finger (Q), this socket being selectively introduced into the duct (l) by means of a flexible rod (J) terminated by a pusher (H) which is movable within the socket (K) and is capable of ejecting the device from the socket.

21. Safety device according to any one of Claims 14 to 20, **characterized in that** it comprises centring brackets (721 to 724) fixed in a supple or flexible manner to the downstream end (72) of the drum (7) and spreading out radially around the drum (7).

22. Safety device according to any one of the preceding claims, **characterized in that** the fluid is gaseous.

23. Safety device according to any one of the preceding claims, **characterized in that** the jacket (5) is elastic.

24. Process for protecting a duct (1) of defined cross section against an excessive flow, in which duct a fluid likely to exert a variable differential pressure between upstream and downstream zones of the duct circulates in a defined direction of flow, this process utilizing a differential pressure variation, where this is greater than a first defined threshold (F32), to close off a defined flow jet in the duct, **characterized in that** it comprises procedures and operations consisting in: using a radially deformable membrane (5) to divide the fluid circulating selectively in the duct into a jet (Vi) inside the membrane and a jet (Ve) outside the membrane, the internal and external jets having respective cross sections which are selectively variable and mutually complementary relative to the cross section (S_{T}) of the duct; preventing the fluid absent from the internal jet (Vi) from infiltrating it in the direction of flow for as long as the differential pressure exerted by the fluid is equal to or less than a first threshold (F32); admitting into the internal jet (Vi) the fluid circulating in the direction of flow where the differential pressure exerted by the fluid exceeds the first threshold (F32); and preventing the fluid from leaving the internal jet (Vi) by following the direction of flow, at least where the differential pressure exerted by the fluid exceeds a second threshold (F34).
